# EUROPEAN PATENT APPLICATION

(11) **EP 3 210 694 A1**
(43) Date of publication of application: **30.08.2017**
(21) Application number: 17157925.3
(22) Date of filing: 24.02.2017
(51) Int. Cl.: B22C 9/10, B22F 3/105

(54) **CASTING WITH GRADED CORE COMPONENTS**

(30) Priority: 29.02.2016 US 201615056703
(71) Applicant: General Electric Company, Schenectady, NY 12345 (US)
(72) Inventor: BUNKER, Ronald Scott, West Chester, OH 45069 (US); KONITZER, Douglas Gerard, Cincinnati, OH 45215 (US)
(74) Representative: Pöpper, Evamaria

(57) **Abstract**

The present disclosure generally relates to investment casting molds (1000) comprising a casting core (900) comprising at least one graded core component(500, 901, 902, 1003, 1004), the graded core component (500, 901, 902, 1003, 1004) comprising at least one graded transition (503) between a first core material (501, 901) and a second core material (502).

## Description

### INTRODUCTION

The present disclosure generally relates to graded investment casting core components and processes utilizing these core components. The graded core components of the present invention may include grading between more than two materials within a single class of material, for example tungsten/molybdenum, or between different classes of materials, for example tungsten/ceramic. The graded cores provide useful properties in casting operations, such as in the casting of superalloys used to make turbine blades for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. Among the various cooling passages in the blades, includes serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

The manufacture of these turbine blades, typically from high strength, superalloy metal materials, involves numerous steps. First, a precision ceramic core is manufactured to conform to the intricate cooling passages desired inside the turbine blade. A precision die or mold is also created which defines the precise 3-D external surface of the turbine blade including its airfoil, platform, and integral dovetail. The ceramic core is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell. Then, the wax is melted and removed from the shell leaving a corresponding void or space between the ceramic shell and the internal ceramic core. Molten superalloy metal is then poured into the shell to fill the void therein and again encapsulate the ceramic core contained in the shell. The molten metal is cooled and solidifies, and then the external shell and internal core are suitably removed leaving behind the desired metallic turbine blade in which the internal cooling passages are found.

The cast turbine blade may then undergo additional post casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. However, these post casting modifications are limited and given the ever increasing complexity of turbine engines and the recognized efficiencies of certain cooling circuits inside turbine blades, the requirements for more complicated and intricate internal geometries is required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

Precision metal casting using hybrid core components utilizing a combination of refractory metal and ceramic casting components is known in the art. For example, U.S. Patent No. 6,637,500, entitled "Cores for use in precision investment casting." Fig. 1 shows a thin refractory metal trail edge core component forming part of an overall investment casting core. The thin refractory metal element 420 can be attached to the ceramic portion 422 by providing a refractory metal component with regions 424 which produce recessed pockets 426 injecting the ceramic around this protruding element, and/or into the pockets to provide a mechanical lock between the ceramic element and the refractory metal element. Hybrid core materials have been made that include portions of refractory metal and ceramic material. For example, *See* U.S. 2013/0266816 entitled "Additive manufacturing of hybrid core." The techniques used to manufacture hybrid cores disclosed in this application utilized conventional powder bed technology. Although hybrid cores offer additional flexibility for casting of superalloys for example in the casting of turbine blades used in jet aircraft engines, there remains a need for more advanced investment casting core technology.

### SUMMARY

The present invention relates to a novel casting mold comprising a casting core comprising at least one graded core component, the graded core component comprising at least one graded transition between a first core material and a second core material. The graded transition between the first core material and second core material in the graded core component may be formed by additive manufacturing processes using advanced methods of direct laser melting/sintering described herein. The outer shell mold can be a ceramic material. The core component may be a ceramic component with the graded core component attached.

The first core material and second core material is either two types of material of the same class (i.e., two different refractory metals) or two different classes of materials (i.e., a refractory metal and a ceramic). In one embodiment the first core material of the graded core component is a refractory metal. The second core material may be a different type of refractory metal, a metal that is not a refractory metal, or a ceramic material.

The graded core component can be adapted to define within a cast component cooling holes, trailing edge cooling channels, or micro channels among other structures. The graded core component may also be adapted to provide a core support structure, a platform core structure, or a tip flag structure. Several graded core components may be used in a single casting core, or a single graded core component may be used either alone or with other casting components in a ceramic casting core assembly.

The present invention also relates to methods of making a cast component comprising: pouring a liquid metal into the casting mold and solidifying to form the cast component, the casting mold comprising a casting core with at least one graded core component, the graded core component comprising at least one graded transition between a first core material and a second core material; and removing the casting core from the cast component.

The invention also relates to making the casting mold using a process that involves forming at least a portion of the casting core with a disposable pattern material to form a core assembly; and removing the disposable pattern material from the core assembly. The disposable pattern material can be wax or a metal with a lower melting point than the graded core component or another material that is removed using thermal or chemical processes to reveal the casting core cavity into which a melted superalloy may be poured.

In one aspect of the invention, the graded core component can be made using an additive manufacturing technique such as direct laser melting/sintering in a powder bed process that is capable of utilizing more than one powder composition to provide a graded structure. The additive method builds the graded core component on a layer by layer basis, including steps of (a) consolidating through irradiation, binder injection, and/or sintering a layer of powder in a powder bed to form a fused/sintered region; (b) providing a subsequent layer of powder over the powder bed; and (c) repeating steps (a) and (b) using at least two different powder compositions corresponding to the first core material and second core material to form the graded core component.

In another aspect, the entire casting core including at least one graded core component is made by a direct last melting/sintering from a powder bed. Alternatively, the graded core component is assembled within a mold and a ceramic slurry is introduced to create the casting core.

### BRIEF DESCRIPTION OF THE DRAWINGS

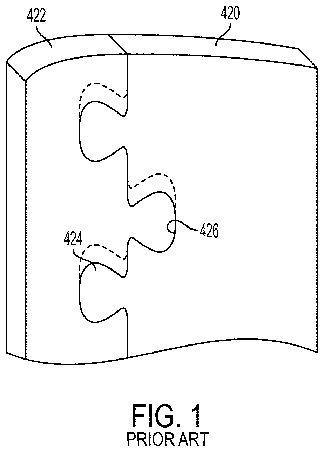

Fig. 1 shows a prior art hybrid core component.
Fig. 2 is a schematic diagram showing an example of a conventional apparatus for additive manufacturing.
Fig. 3 is a perspective view of an additive manufacturing device that allows for production of parts having differing compositions throughout the build.
Fig. 4 is a top view of a component being manufactured using the additive manufacturing device shown in FIG. 2.
Fig. 5 shows a graded core component in accordance with an embodiment of the present invention.
Fig. 6 shows the profile for a discrete stepped graded transition in accordance with one embodiment of the invention.
Fig. 7 shows the profile for a continuous graded transition in accordance with one embodiment of the invention.
Fig. 8 shows the profile for a diffusion graded transition in accordance with one embodiment of the invention.
Fig. 9 shows graded core component that includes a refractory metal graded transition to a ceramic material.
Fig. 10 shows a casting mold including a casting core including graded core components.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details.

The graded components of the present invention can be made using an additive manufacturing process. AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics are in use. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex. Other methods of fabrication may be used by those of ordinary skill without departing from the scope of the present disclosure.

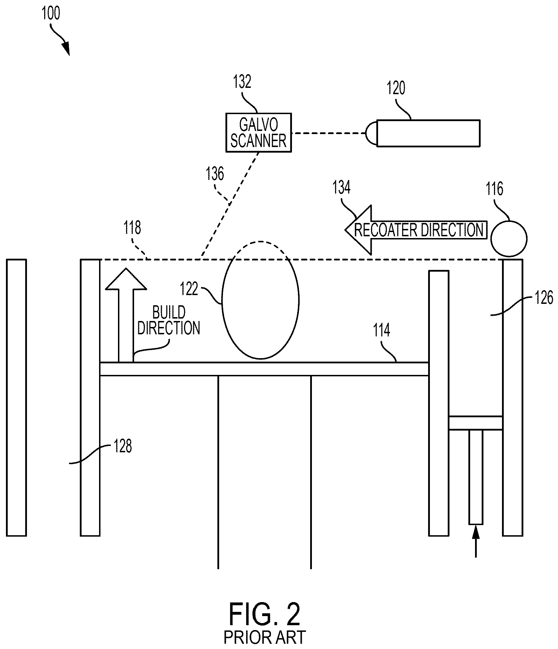

FIG. 2 is schematic diagram showing a cross-sectional view of an exemplary conventional system 100 for direct metal laser sintering (DMLS) or direct metal laser melting (DMLM). The apparatus 100 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of excess powder by, for example, blowing or vacuuming. Other post processing procedures include a stress relief process.

The traditional laser melting/sintering techniques described above have certain limitations in regard to producing AM objects having varying compositions. For example, although it is possible to vary the composition of the powder in successive layers this can become cumbersome particularly in an industrialized setting where downtime between manufacturing steps comes at a high cost. Recently, more advanced methods of laser melting/sintering have been developed that allow precise control of the composition of the build both between successive powder layers of the build and laterally within the same powder layer. *See* U.S. Patent Application No. 14/834,517 filed August 25, 2015, and entitled "Coater Apparatus and Method for Additive Manufacturing," which is incorporated by reference herein in its entirety.

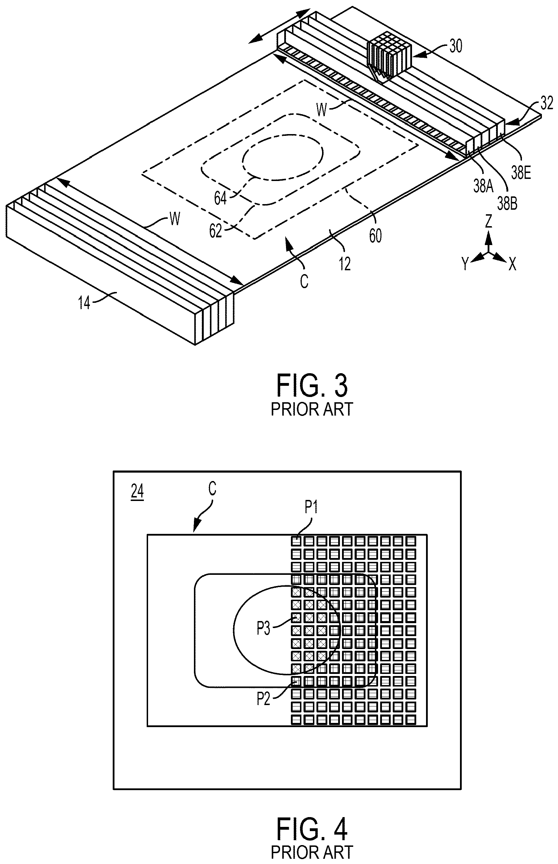

As shown in Fig. 3, the advanced powder bed machine includes a reservoir assembly 30 positioned above a dispenser 32. The dispenser 32 includes one or more elongated troughs 38A-E. The elongated troughs include a deposition valve (binary or variable) between the trough and the build plate that control the deposition of powder on the build plate 12.

The reservoir assembly 30 includes at least one reservoir disposed over each trough 38A-E. Each reservoir is defined by suitable walls or dividers forming a volume effective to store and dispense a powder, referred to generally at "P" (i.e., P1, P2, P3, etc. as illustrated in Fig. 4). Each individual reservoir may be loaded with a powder P having unique characteristics, such as composition and/or powder particle size. For example, P1 may be used to build part 60, P2 may be used to build part 62, and P3 may be used to build part 64. It should be appreciated that the powder P may be of any suitable material for additive manufacturing. For example, the powder P may be a metallic, polymeric, organic, or ceramic powder. It is noted that the reservoir assembly 30 is optional and that powder P may be loaded directly into the troughs 38A-38E.

Optionally, it may be desired to purge the troughs 38A-E between cycles of the process, for example where it is desired to deposit different mixtures of powder from previous cycles. This may be accomplished by moving the trough 38A-E over the excess powder container 14 and then opening the deposition valves to dump the excess powder. The process may be augmented by flowing a gas or mixture of gases through the troughs 38A-E.

FIG. 4 shows one-half of a powder layer 24 for the component C which has been subdivided into a grid that is 10 elements wide by 15 elements tall. The size of the grid elements and their spacing are exaggerated for purposes of clarity in illustration. The representation of the component C as a series of layers each with a grid of elements may be modeled, for example, using appropriate solid modeling or computer-aided design software. Each unique hatching pattern shown in FIG. 3 represents the characteristics of one unique powder (e.g. composition and/or particle size). As shown, a single layer of powder may include three different types of powder, P1, P2, and P3.

This cycle of applying powder P and then laser melting the powder P is repeated until the entire component C is complete.

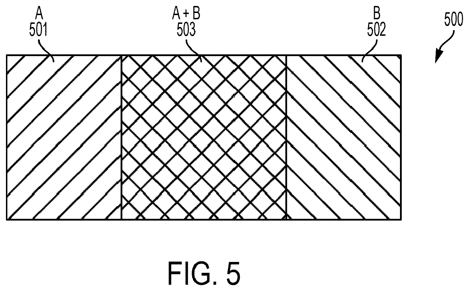

The process above enables formation of a graded core component 500 that includes a graded transition 503 between at least a first core material 501 and a second core material 502, Fig. 5. The grade core component shown in FIG. 5 is shown by way of example and is non-limiting of the invention as to its shape, grading characteristics, or composition characteristics. The additive manufacturing techniques described above enable formation of almost any desired shape and composition of graded core component. The graded core can optionally be assembled with other refractory metal pieces or other metal (non-refractory) or ceramic components. The graded core component and any other optional components are then placed into a mold, preferably a ceramic cast such as used in the manufacture of superalloy turbine blades for jet aircraft engines. The cast component may then be prepared and molten superalloy poured into the cavity of the cast including contact with the graded core components. The core component is then removed using a combination mechanical and chemical process. The ceramic material may be leached out using a caustic solution under elevated temperature and/or pressure. The graded core component(s) may then be chemically etched away from the formed superalloy component using an acid treatment.

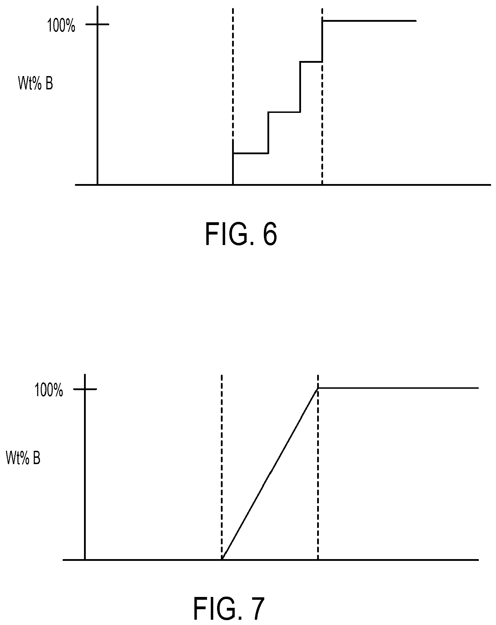

The term "graded transition" includes a discrete stepped graded transition as shown in Fig. 6. The discrete stepped graded transition is created by step-wise variation in the powder composition in a powder bed either within a single layer or between successive layers. The stepwise transition may be smoothed by subsequent diffusion of the materials. However, for any two given materials, the discrete stepped graded transition provides a more gradual transition between the materials than that possible by diffusion alone.

The term "graded transition" includes a continuous graded transition as shown in Fig. 7. The continuous graded transition is created by continuous variation in the powder composition in a powder bed either within a single layer or between successive layers. In the case of successive layers, a continuous transition denotes one where step-wise material changes are so gradual that it is impossible to detect a stepped grade in the material. For example, if the materials subsequently diffuse to the point where the transition appears continuous between materials. As with the discrete stepped graded transition, for any two given materials, the continuous graded transition provides a more gradual transition between the materials than that possible by diffusion alone.

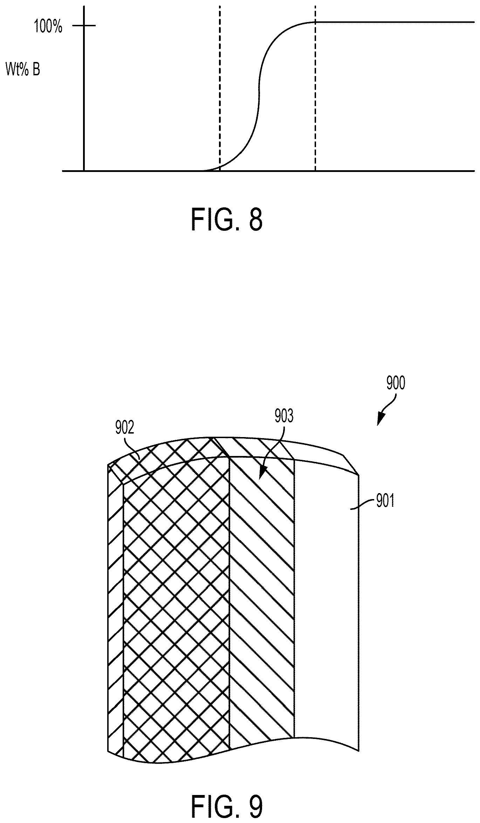

The term "graded transition" includes a diffused graded transition only in the case where both materials diffuse within each other such that there a gradual transition after heat treatment. Fig. 8. For example, where two refractory metals are deposited adjacent each other without using a discrete stepped or continuous graded transition, it is possible to provide a graded transition by heat treatment so long as the materials diffuse within each other. In some cases, the two materials will form an alloy within the diffusion graded transition region. Where a refractory metal is provided adjacent a ceramic the transition between the materials may also be graded, for example, to match a thermal expansion of one or more of the adjacent materials.

Fig. 9 illustrates one example of the use of a graded core component where a refractory metal component 901 is a thin refractory metal trail edge core component that forms part of an overall investment casting core 900. The thin refractory metal element 901 includes a graded transition region 903 between it and the remainder of the ceramic core component 902. The graded transition is either a discrete step graded transition or a continuous graded transition as discussed above. The use of a graded transition in this aspect eliminates the need to provide a mechanical lock between the ceramic element and the refractory metal element and allows for the creation of more intricate casting core design. In this case, the ceramic portion 902 may be physically attached to the ceramic core component. Alternatively, the entire ceramic core component along with refractory metal components can be printed using a powder bed process in accordance with this invention.

The graded transition shown in Fig. 9 is generally a linear graded transition in the sense that the grading is uniform in the vertical direction shown in the image. However, the grading may vary in the horizontal direction as well. For example, the amount of grading may vary between regions of the same object. One example of this would be instead of the linear grading shown in Fig. 9, the grading could have a wave-like appearance in the vertical direction. A wave-like grading pattern may be useful to help provide physical strength between two materials and/or match one or more properties of the materials, i.e., thermal conductivity.

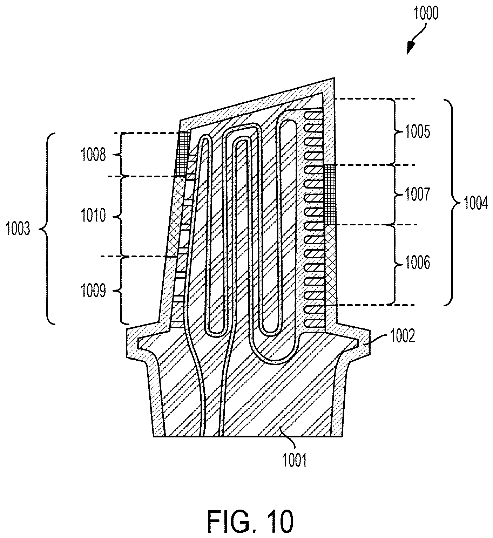

Fig. 10 illustrates a casting mold 1000 that includes graded core components 1003, 1004 in accordance with the present invention. The casting mold 1000 may be used to cast a component such as a single-crystal superalloy turbine blade.

Referring to Fig. 10, the casting mold 1000 may include a disposable pattern material 1001 and a second metal component 1002. In an example embodiment, the disposable pattern material 1001 may include a metal that is a metal that is non-refractory metal (e.g., a metal with lower melting point than refractory metals). The disposable pattern material 1001 and the second metal component 1002 may be formed using a simultaneous printing technique. For example, the simultaneous printing of two metals are described in U.S. Patent Application Number 15/056663, titled "CASTING WITH FIRST METAL COMPONENTS AND SECOND METAL COMPONENTS" and filed February 29, 2016. Alternatively, the disposable pattern material could be a ceramic material capable of being direct printed with the metal material and later etched out. In another example embodiment, the second metal component 1002 may include a first graded section with graded core components 1008, 1009, 1010. In addition, the second metal component 1002 may include a second graded section 1004 with second graded core components 1005, 1006, 1007. A graded transition may be located at the border between adjacent graded core components. The graded transitions may include a discrete step graded transition, a continuous graded transition, or a diffusion graded transition. The graded transition may include any shape as understood by one of ordinary skill without departing from the scope of the present disclosure. The materials of the second metal component and or the graded core components may be chosen to locally alter the composition of the cast component by diffusing one or more elements or alloys into the superalloy component.

In addition, adjacent graded core components may be formed from different materials. For example, the materials selected for the graded core components may include a metal that is a non-refractory metal/alloy (e.g., aluminum, copper, cobalt, cobalt-chrome, silver, and/or gold, or combinations or alloys thereof), a refractory metal (e.g., tungsten, molybdenum, niobium, or tantalum, or combinations or alloys thereof), or a ceramic. Each of the graded core components may be formed from different materials.

For example, the first graded core component 1003 may be made of a first refractory metal 1008, a second refractory metal 1010, and a third refractory metal 1009. A first graded transition may be located at the border between the first refractory metal 1008 and the second refractory metal 1009. A second graded transition may be located at the border between the second refractory material 1010 and the third refractory material 1009. Additionally and/or alternatively, one or more metals that are a non-refractory metal and/or a ceramic may be used in first graded core component 1003.

Similarly, the second graded core component 1004 may be made of a fourth refractory metal 1005, a fifth refractory metal 1007, and a sixth refractory metal 1006. A third graded transition may be located at a border between the fourth refractory metal 1005 and the fifth refractory metal 1007. A fourth graded transition may be located at a border between the fifth refractory material 1007 and the sixth refractory material 1006. Additionally and/or alternatively, one or more metals that are a non-refractory metal and/or a ceramic may be used in first graded core component 1004.

The graded core component shown above is exemplary, and can be included within any type of casting core or shell arrangement. The graded core component can be used to form cooling holes, trailing edge cooling channels, or micro channels in a cast component. In addition, the grade core components may be used for a core support structure, a platform core structure, or a tip flag structure. In one aspect, the graded core component provides an advantage of higher resolution casting. For example, where graded core component transitions between a ceramic portion and a refractory metal composition as shown in Fig. 9.

The refractory metals can be used in accordance with this invention and are commercially available in forms already used for hybrid core components. Some refractory metals may oxidize or dissolve in molten superalloys. Refractory metal core components may be coated with ceramic layers for protection. Alternatively the refractory metal components may include a graded transition to a surface having a ceramic layer that is 0.1 to 1 mil thick for protection. The protective ceramic layer may include silica, alumina, zirconia, chromia, mullite and hafnia.

The core components of the invention may include a refractory metal that has a graded transition to a layer of another metal such as a noble metal (i.e., platinum) or chromium or aluminum to protect against oxidation. These metal layers may be applied alone or in combination with the ceramic layer discussed above.

One or more of the components of the graded core component may be a refractory that forms a surface protective film upon heating may be used. For example, MoSi₂, respectively forms a protective layer of SiO₂.

The superalloys that may be used to form the cast component include nickel based alloys including inconel and others.

The first metal component 1001 and the second metal component 1002 may be removed during and/or after forming a superalloy cast component. The first metal component 1001 may be chosen such that it has a lower melting point than the second metal component 1002. In this way, the first metal component 1001 may be melted and removed without melting and/or causing damage to the second metal component 1002. Thereafter, the melted superalloy may be poured into a cavity formed by removing the first metal component 1001 and by leaving the second metal component 1002. The removal of the second metal component 1002 may be performed after solidifying the melted superalloy to produce the cast component (e.g., turbine blade). For example, the second metal component 1002 may be removed using chemical means including, but not limited to, etching using an acid treatment. The etching to remove the second metal component may be performed before or after immersion in a caustic solution under elevated temperature and pressure to remove any ceramics. In one aspect, the second metal component is sintered rather than melted. This may increase the number of options for removing the second metal. For example, in some cases the sintered (incompletely fused) second metal may be removed using physical means (e.g., shaking). In addition, sintered material may be more readily removed using an acid etch where the etch solution more rapidly penetrates the sintered powder structure.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Various aspects and embodiments of the present invention are defined by the following clauses:
1. A casting mold comprising:
   a casting core comprising at least one graded core component, the graded core component comprising at least one graded transition between a first core material and a second core material.
2. The casting mold of clause 1, wherein the first core material is a refractory metal.
3. The casting mold of clause 1, wherein the first core material is a metal that is not a refractory metal.
4. The casting mold of clause 1, wherein the first core material is a ceramic.
5. The casting mold of clause 2, wherein the first refractory metal is tungsten or tungsten alloy.
6. The casting mold of clause 2, wherein the first refractory metal is molybdenum or molybdenum alloy.
7. The casting mold of clause 1, further comprising:
   an outer shell mold surrounding at least a portion of the casting core and defining a cavity around the casting core,
   wherein the outer shell mold is ceramic.
8. The casting mold of clause 1, wherein the graded core component is adapted to define within a cast component cooling holes, trailing edge cooling channels, or micro channels.
9. The casting mold of clause 1, wherein the graded core component is adapted to provide a core support structure, a platform core structure, or a tip flag structure.
10. A method of making a cast component comprising:
   pouring a liquid metal into a casting mold and solidifying the liquid metal to form the cast component, the casting mold comprising a casting core that includes a graded core component, the graded core component comprising at least one graded transition between a first core material and a second core material.
11. The method of clause 10, further comprising preparing the casting mold before pouring the liquid metal, the preparing comprising:
   forming at least a portion of the casting core with a disposable pattern material to form a core assembly; and
   removing the disposable pattern material from the core assembly.
12. The method of clause 10, wherein the first core material is a ceramic or is a metal that is a non-refractory metal.
13. The method of clause 12, wherein the second core material is a metal that is refractory metal or ceramic.
14. The method of clause 11, wherein the disposable pattern material is wax or a metal with a lower melting point than the at least one graded core component.
15. The method of clause 11, further comprising:
   removing the disposable pattern material by melting; and
   removing the at least one graded core component by etching.
16. The method of clause 10, wherein the method comprises additively forming the graded core component on a layer-by-layer basis, comprising steps of:
   (a) irradiating a layer of powder in a powder bed to form a fused or sintered region;
   (b) providing a subsequent layer of powder over the powder bed; and
   (c) repeating steps (a) and (b) using at least two different powder compositions corresponding to at least the first core material and the second core material to form the graded core component.

## Claims

1. A casting mold (1000) comprising:
a casting core (900) comprising at least one graded core component (500, 901, 902, 1003, 1004), the graded core component (500, 901, 902, 1003, 1004) comprising at least one graded transition (503, 903) between a first core material (501, 901) and a second core material (502, 902).

2. The casting mold (1000) of claim 1, wherein the first core material (501, 901) is a refractory metal.

3. The casting mold (1000) of claim 1, wherein the first core material (501, 901) is a metal that is not a refractory metal.

4. The casting mold (1000) of claim 1, wherein the first core material (501, 901) is a ceramic.

5. The casting mold (1000) of claim 2, wherein the first refractory metal (501, 901) is tungsten, a tungsten alloy, molybdenum, or a molybdenum alloy.

6. The casting mold (1000) of any of the preceding claims, further comprising:
an outer shell mold surrounding at least a portion of the casting core (900) and defining a cavity around the casting core (900),
wherein the outer shell mold is ceramic.

7. The casting mold (1000) of any of the preceding claims, wherein the graded core component (901, 902, 1003, 1004) is adapted to define within a cast component cooling holes, trailing edge cooling channels, or micro channels.

8. The casting mold (1000) of any of the preceding claims 1 to 6, wherein the graded core component (901, 902, 1003, 1004) is adapted to provide a core support structure, a platform core structure, or a tip flag structure.

9. A method of making a cast component comprising:
(a) pouring a liquid metal into a casting mold (1000) and solidifying the liquid metal to form the cast component, the casting mold (1000) comprising a casting core (1002) that includes a graded core component (901, 902, 1003, 1004), the graded core component (901, 902, 1003, 1004) comprising at least one graded transition (503) between a first core material (1008) and a second core material (1010).

10. The method of claim 9, further comprising preparing the casting mold (1000) before pouring the liquid metal, the preparing comprising:
(b) forming at least a portion of the casting core (900) with a disposable pattern material to form a core assembly; and
(c) removing the disposable pattern material (1001) from the core assembly.

11. The method of claim 9 or 10, wherein the first core material (501, 901) is a ceramic or is a metal that is a non-refractory metal.

12. The method of any of the preceding claims 9 to 11, wherein the second core material (502) is a metal that is refractory metal or ceramic.

13. The method of any of the preceding claims 9 to 12, wherein the disposable pattern material (1001) is wax or a metal with a lower melting point than the at least one graded core component (901, 902, 1003, 1004).

14. The method of any of the preceding claims 9 to 13, further comprising:
(d) removing the disposable pattern material (1001) by melting; and
(e) removing the at least one graded core component (901, 902, 1003, 1004) by etching.

15. The method of any of the preceding claims 9 to 15, wherein the method comprises additively forming the graded core component (901, 902, 1003, 1004) on a layer-by-layer basis, comprising steps of:
(f) irradiating a layer of powder in a powder bed to form a fused or sintered region;
(g) providing a subsequent layer of powder over the powder bed; and
(h) repeating steps (f) and (g) using at least two different powder compositions corresponding to at least the first core material (501, 901) and the second core material (502) to form the graded core component (901, 902, 1003, 1004).
